# EUROPEAN PATENT APPLICATION

(11) **EP 1 063 816 A2**
(43) Date of publication of application: **27.12.2000**
(21) Application number: 00401674.7
(22) Date of filing: 14.06.2000
(51) Int. Cl.: H04L 12/24

(54) **Method for optimizing the scalability and efficiency of telecommunication networks**

(30) Priority: 21.06.1999 IT MI991377
(71) Applicant: ALCATEL, 75008 Paris (FR)
(72) Inventor: Coltro, Claudio, 20060 Cassina de' Pecchi (Milano) (IT)
(74) Representative: Colombo, Stefano Paolo

(57) **Abstract**

A method of managing telecommunication transport networks by trading-off, efficiency and network scalability, is described. The method is characterized in that the highly consolidated traffic or the high growth traffic or both, are moved up or "promoted" to more coarsely consolidated facilities and, conversely, those traffic flows that are lowly consolidated or have low growth perspectives, or both, are moved down, or demoted, to more finely consolidated facilities.

## Description

The present invention relates to the field of telecommunication transport networks and in particular it relates to a new method of managing them in order to obtain a more efficient scalability.

In general, public infrastructure equipment manufacturers of optical network apparatus have followed a network planning approach towards efficiency, while private infrastructure equipment manufacturers have followed a scalability approach. In other words, some of them have always believed that efficiency is the main concern in designing an optical transport network sometimes to the detriment of network scalability. Those who followed such a first view only foresaw and took into account a certain, and generally fixed, traffic growth per year. On the contrary, those who followed the "scalability approach" have given up the network efficiency for the benefit of the improvement of the network modernization. Up to now, in most cases the first approach proved to be the rightest choice. Today with the explosion of new services there are major difficulties in planning networks and the capacity of a network to scale accordingly is becoming all more and more important.

This is why many operators are beginning to question the benefits of network efficiency, that is operators are slowly becoming more concerned as to how to track traffic growth than creating more efficient networks.

The current approach for solving the above problem of traffic growth and traffic resource administration is simply to overbuild the whole networks with little regard for the return on investment of the network infrastructure. This means that also the outside plants, which are the most expensive parts of a transport network, are oversized.

In view of the above, the main object of the present invention is to provide a method of managing telecommunication transport networks for improving the scalability thereof according to both network fill and traffic growth considerations without sacrificing the network efficiency.

In other words, the main object of the present invention is to provide a method of managing telecommunication transport networks which is able to trade-off network efficiency and network scalability in a very effective way.

It is a further object of the present invention to provide a network managing method advising and helping in real time operators to selectively assign poorly used resources in those network areas where the greatest growth is expected, while assigning better used resources to those sub-networks or links where traffic growth is expected to be more modest. Such an approach should be able to adjust network scalability/efficiency ratio in a controlled manner, which is clearly better than the dumb approach of "overbuild everywhere", thus reducing inefficiencies and increasing the return on investment of the network infrastructures.

The above and further objects are achieved by a method having the features set forth in claim 1, which is considered as an integral part of this description. Further advantageous features of the method according to the present invention are set forth in the further claims, which are also considered as an integral part of the present invention.

The basic idea of the present invention is "promoting" the highly consolidated traffic or the high growth traffic to more coarsely consolidated facilities and "demoting" the lowly consolidated or low growth traffic to more finely consolidated facilities.

A detailed description of the present invention is given below. The present invention will become promptly and completely understood after reading such a detailed description with reference to the annexed drawings. It is to be noted that both the description and drawings are given only for illustrating an exemplifying and non-limiting embodiment of the invention itself.

In the various Figures:
- Fig. 1 illustrates the concept of the costs incurred to achieve network fill, by comparing the single STM1 cost and the managed facilities;
- Fig. 2 shows the traffic and resource administration notion;
- Fig. 3 diagrammatically shows the break even cost and break even traffic concepts; and
- Fig. 4 shows the positioning of the present invention and also inputs/outputs of a possible software implementation of the method according to the present invention.

Before giving a detailed description of the present invention, it will be explained the meaning of "network fill". "Network fill " is the percentage of utilisation of a given network infrastructure. It takes into account utilisation of fibre and multiplexing equipment. As an example in the SDH hierarchy, a VC-4 stream, which could take up to 63 VC-12, could be filled according to different levels, if only 21 VC-12s are used, the fill of that VC-4 is 33%. In another much more complex case, optical fibers carrying a number of wavelengths, whose wavelengths carry a number VC-4, whose VC-4s carry a number of VC-12s, will also have a network fill that can be easily calculated. Multiplexing equipment is used to consolidate traffic into existing facilities, where "to consolidate" means to increase the network fill.

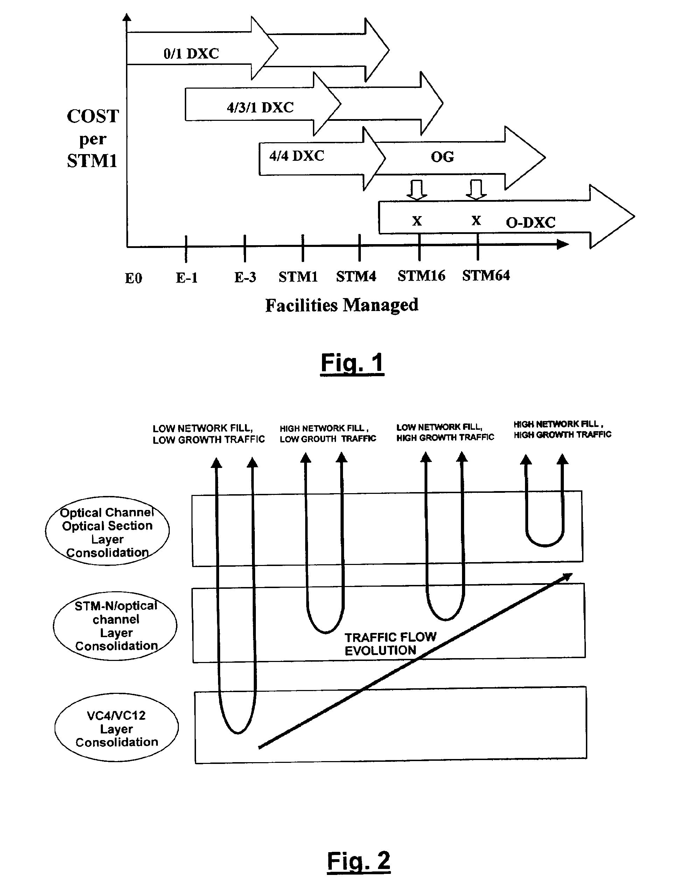

Fig. 1 indicates that the more detailed the granularity by which a system manages traffic, the higher is the cost with respect to a system managing traffic by a lower or less detail granularity.

The present invention has the main object of assisting network operators to keep their networks as efficient and scalable as possible by giving them the possibility to trade efficiency and scalability off to each other. The method of the present invention is carried out at the network manager layer.

The network management method for controlling scalability and efficiency in telecommunication networks is based on assigning poorly used resources in those network areas where a greater growth is expected; conversely, traffic is demoted by assigning better used resources to those sub-networks or links where traffic growth is expected to be more modest. Promotion of traffic can be done selectively in the network depending on the network fill and its expectations of growth. As it is well known, the finer the granularity with which traffic is handled, the higher is the network fill obtained, but also the higher the cost of the network. This concept is shown in Fig. 1.

Traffic promotion is the process by which highly consolidated traffic or high growth traffic or both is moved up or promoted to more coarsely consolidated facilities. Conversely, those traffic flows that are lowly consolidated or have low growth perspectives or both are moved down, or demoted, to more finely consolidated facilities.

For most of the networks built today, the outside plant is the most expensive part of the network and so, to improve its use, traffic is fed into equipment that consolidates and segregates traffic into fiber cables. But one of the main problems of this approach is that equipment may not be able to expand as fast as traffic is growing. This implies that the equipment that is there to provide network fill and efficiency threatens scalability. The method according to this invention introduces the notion of promoting traffic from "retail"-managed flows into "wholesale"-managed flows as to provide network scalability. This concept is shown in Fig. 2.

The process of promoting traffic takes three steps:

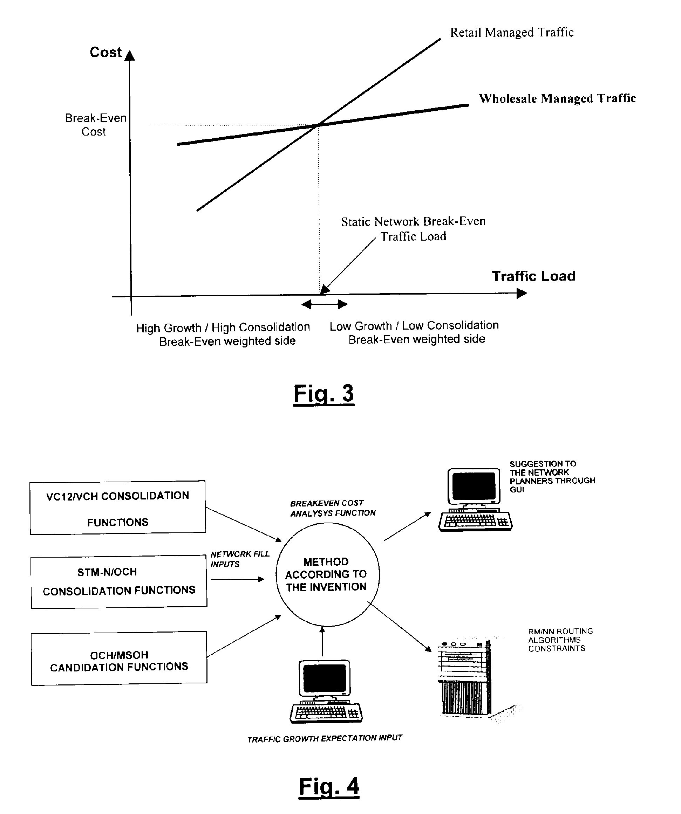

In the first step the traffic is classified in terms of the network fill and expected traffic growth. As far as the traffic classification is concerned, many categories could be defined. As an example of a simple classification, four categories could be defined as follows: i) low fill & low growth; ii) low fill & high growth; iii) high fill & low growth; and iv) high fill & high growth. The way in which these traffic flows are routed in the network is diagrammatically shown in Fig. 3.

The second step consists in implementing the traffic promotion briefly explained above. In this notion, two parameters play a major role, the first is the so-called break-even point (see Fig. 3) at which the transmission of a traffic flow on a consolidated aggregated flow costs the same as transmitting the same traffic flow into a non consolidated aggregate flow. The trade-off here lies in the intersection point at which the cost of grooming equipment matches the cost of the inefficiency of a poorly utilized facility as shown in Fig. 3. This calculation would give the operator the right information on where to place traffic, either on highly consolidated facilities or in poorer consolidated facilities. But this calculation would only help in a rather static transport network. Hence, for those traffic relations that are expected to grow fast may result in that the allocating resources at break even point may lead to network scalability problems. This is why another parameter is introduced in the process. The second fundamental parameter for the traffic promotion policy proposed for this invention is the "expectation of traffic growth". The growth expectations may anticipate promotion, and while break-even calculations are highly deterministic and easy to calculate by a simple algorithm, the growth parameter is pretty much empirical and left to the network planner to ponder on. Information on traffic growth may be inferred from marketing forecasts and new services development.

The third step the present invention is proposed to implement, is to feed the results of analyzing the network through its narrow optics of break-even and traffic growth expectation analysis to either the operator for manual traffic promotion or to the NML (Network Manager Layer) system routing and resources administration algorithm as new constraints to its operation. Hence, promotion is proposed here to be done manually under full control of the operator, whilst the creation of new traffic flows and its consolidation attributes is left to the NML routing and resource administration algorithms.

Figure 3 illustrates the concept of break-even costs and break-even traffic load with its weighted sides, that is when traffic is potentially high growth and/or high consolidation and for those cases when traffic is expected to exhibit low growth and/or having low consolidation.

The present invention introduces the notion of promoting traffic from retail managed flows into wholesale managed flows to insure network scalability in case the traffic growth and/or the consolidation are high. And vice versa, the notion of demoting traffic from wholesale-managed flows into retail managed flows to improve network efficiency in case the traffic growth and/or the consolidation are low. This concept is illustrated in Figure 3 below.

From Figure 3, it is possible to infer that while initially the traffic flows were managed in a certain planned way, for example in a retailed way because the expected traffic growth was initially rather slow and thus a wholesale management would not be justified, in view of an unexpected traffic growth such a traffic retail management would become inappropriate. Thus, it would be convenient to promote traffic to less consolidated facilities, where unexpected growth can be easily accomodated. The change to a wholesale traffic management will be initially more expensive than maintaining a retail management but it will result in later cost savings as it could be appreciated from Fig. 3.

Analogously, in the case where the first choose was towards a traffic wholesale management due to an expected high traffic growth, as soon as it is realized that the growth is not so high, the proposed process would lead to change the management into a traffic retail one.

In addition to the above traffic growth considerations, also network fill considerations are taken into account when implementing the method according to the present invention.

As far as the procedure for the traffic demoting is concerned, it takes the same three steps corresponding to the steps for promoting traffic. The first step consists in classifying traffic in terms of network fill and expected traffic growth. The same categories (i to iv) as for the above promotion procedure could be defined. Again, the way in which these traffic flows are routed in the network is diagrammatically shown in Fig. 2.

The second step consists in demoting to more finely consolidated facilities those traffic flows that are lowly consolidated or have low growth perspectives (or both). Both the expectations of traffic growth and the break-even point should be considered. Finally, the third step is identical to the one for traffic promotion.

Hence, demotion is proposed here to be done manually under full control of the operator, whilst the creation of new traffic flows and its consolidation attributes is left to the NML routing and resource administration algorithms.

Conveniently, the method according to the present invention could be performed through a software program as it is illustrated in Fig. 4. The process proposed in this invention can be implemented in a software application receiving inputs relating to the network fill, e.g. from the network resources administration database, and traffic growth expectations from the network operator. The software application will carry out a break-even cost analysis and provide proper information to the network planners, possibly through a graphic user interface (GUI). Further, through the method according to the present invention, the software application proposed will produce routing constraints to the Network Manager Layer system routing and resource administration algorithm to include scalability constraints in its operation.

The process of trading-off network scalability for efficiency works interactively as the network operator sets up circuits in the network. This application is envisaged to help the network operator to find which is the most convenient way from the operational and administrative point of view to serve traffic circuits in a hierarchical network.

As it is known, in a network there is usually an optical layer carrying wavelengths at 2,5 and 10Gb/s line rates. Above this layer there is typically an SDH layer, this is able to consolidate traffic by multiplexing 2Mb/s and 34Mb/s into 155Mb/s and these into 622Mb/s, 2,5Gb/s and 10Gb/s flows that can be carried by either fiber or wavelengths.

Typical services span from 2Mb/s to STM-1 s leased lines. So if there is a demand for a STM-1 circuit, there is always the issue of placing it with a dedicated STM-1 Mb/s container or as part of a partially filled wavelength container. Let's see how can the present invention can help to answer this question.

Fig. 3 illustrates a pair of curves showing the cost as a function of network fill in the high order SDH layer, where STM-1s are multiplexed to fill STM-16s and in the optical layer where wavelengths are multiplexed together to fill optical fibers. The curves are very illustrative as they give an idea on where the break-even point is. The optical layer network is generally speaking optimized for high capacity transport so the cost per bit is much lower than the cost per bit transmitted by the SDH network. If for example the cost per transmitted bit in the optical network is a quarter of the cost when using the SDH network, the only impediment to deploy everywhere optical layer networks is that it is difficult to fill them adequately. This consideration on cost of investment is simple to grasp. But as networks need to operate for many years to recover the investment made on them, there are other important issues related to the operations and administration of the network that need to be taken into account. In the current market situation where traffic demand is growing very high, in many cases demand is duplicating every year, to have a network ready to scale when required is deemed, from the operational point of view, very important.

So, let's suppose that the application says that running the STM-1 circuit on SDH has a fill ratio of 50% on the circuit in which is multiplexed and the cost is 1000. On the other hand, the cost of running it in the optical layer network is 3000 with a fill ratio of 8%. The break-even point illustrated by the application is when the network fill for the optical network is 20%. The decision on where to run this circuit would be very easy to make if the operator would be serving a circuit coming from a dying community. It would choose to run it on SDH as it is the most cost effective and it would give many years of operation without upgrading troubles.

But if the circuit is connecting a smart building with tele-housing capabilities that could host an ISP (Internet Service Provider), the prospects of such a site is that traffic demand will more than duplicate every year. In this case, putting the STM-1 on the optical layer network make sense as the spare room is much higher and after a year the cost of providing it in SDH or Optical layer network come very close, the breakeven point at this growth would be after 1,5 years. After this first year of operation in which the circuit is run inefficiently on the optical network, the service becomes cost effective and very importantly does not need to be re-provisioned for the next 4 years, if demand's growth keeps the same.

This example illustrates how operators can take advantage of this application where costs, filling factors and break even points are showed for every route in the network. And with the operator's knowledge of who is the customer and what are their traffic demands can take a decision that minimizes operational issues keeping costs at a minimum.

There has thus been shown and described a novel method of managing telecommunication transport networks which fulfills all the objects and advantages sought therefor. Many changes, modifications, variations and other uses and applications of the subject invention will, however, become apparent to those skilled in the art after considering the specification and the accompanying drawings which disclose preferred embodiments thereof. All such changes, modifications, variations and other uses and applications which do not depart from the spirit and scope of the invention are deemed to be covered by the invention which is limited only by the claims which follow.

Finally, any reference to SDH transmissions has to be considered as merely exemplifying as the present invention is equally applicable to other types of transmissions, for example to SONET one. Thus, just for this description and claims, any reference to "SDH" also inclues at least "SONET", unless otherwise indicated.

## Claims

1. Method of managing a telecommunication transport network in order to trade-off network efficiency and network scalability, the network having traffic flows installed thereon, the method being characterized by comprising the steps of:
- classifying the installed traffic flows in terms of both network fill and expected traffic growth;
- moving up, or promoting, to more coarsely consolidated facilities those traffic flows which are highly consolidated and/or have a high growth expectations; and
- moving down, or demoting, to more finely consolidated facilities those traffic flows that are lowly consolidated and/or have low growth perspectives.

2. Method according to claim 1, characterized in that the step of classifying the installed traffic flows comprises the step of classifying them into four traffic categories: i) low fill & low growth; ii) low fill & high growth; iii) high fill & low growth; and iv) high fill & high growth.

3. Method according to claim 1 or 2, characterized in that the steps of promoting and demoting traffic flows comprise the steps of promoting and demoting traffic flows according to one or more parameters, comprising the cost break-even point and the expectations of traffic growth.

4. Method according to claim 3, characterized in that it further comprises the step of feeding the results of break-even and traffic growth expectation analysis to an operator for manual traffic flow promotion/demotion.

5. Method according to claim 3, characterized in that it further comprises the step of feeding the results of break-even and traffic growth expectation analysis to a Network Manager Layer (NML) system routing and resource administration algorithm as scalability constraints to its operation.

6. Method according to any of claims 1 to 5, characterized in that it is carried out at Network Manager Layer.

7. Telecommunication transport network having traffic flows installed thereon, said network comprising means for the managing thereof, characterized in that said managing means are able to trade-off network efficiency and network scalability and in turn comprise:
- means for classifying the installed traffic flows in terms of both network fill and expected traffic growth;
- means for moving up, or promoting, to more coarsely consolidated facilities those traffic flows which are highly consolidated and/or have a high growth expectations; and
- means for moving down, or demoting, to more finely consolidated facilities those traffic flows that are lowly consolidated and/or have low growth perspectives.

8. Computer program comprising computer program means adapted to perform all the steps of any of claims 1 to 6 when said program is run on a computer.

9. Computer readable medium having a program recorded thereon, said computer readable medium comprising computer program code means adapted to perform all the steps of any of claims 1 to 6 when said program is run on a computer.
